# EUROPEAN PATENT APPLICATION

(11) **EP 1 806 286 A1**
(43) Date of publication of application: **11.07.2007**
(21) Application number: 04791373.6
(22) Date of filing: 29.10.2004
(51) Int. Cl.: B64C 15/00, F02K 5/02, F02K 1/00

(54) **AIR-JET PROPELLER**

(71) Applicant: Sanchez Sanchez, Felix, E-50010 Zaragoza (ES)
(72) Inventor: Sanchez Sanchez, Felix, E-50010 Zaragoza (ES)
(74) Representative: Manzano Cantos, Gregorio
(86) International application number: PCT/ES2004/000454
(87) International publication number: WO 2006/045856

(57) **Abstract**

SUMMARY

Air jet propeller with three basic bodies, the first body or head has a half ellipse of revolution and a grille on its upper part while the lower part is being closed down by a pipe and a shutting hoop.

The second body or central part with a cylindrical tubular shape has the helical round honeycomb rotor incorporated and fitted to an explosion engine.

The third body or back with a conical base shape has a series of windows, hatches and butterflies balancing, stabilizing and orientating the aircraft with a considerable reduction in petrol consumption and therefore ensuring a decrease in pollution levels, this is possible as aircrafts can fly quite slowly (few kms/h.) facilitating landing and taking off processes with a minimum length of landing strips. The risks involved in landing and taking off at high speed are also being reduced.

## Description

### INVENTION'S OBJECTIVE

This patent invention, as stated in the title is an air jet propeller for propelling and stabilizing aircrafts. This propeller counts with a system in whose inner centre lies an helical round honeycomb rotor connected to a highly revolutionized explosion engine; its body has a set of windows and openings combined with doors, hatches and butterflies allowing stability and balance in aircraft propulsion as well as facilitating landing and taking off processes as a fairly small landing strip is necessary and relatively low speed is requested.

### STATE OF THE TECHNIQUE

Two individual techniques are used in addition to aircraft propulsion in order to facilitate taking off and landing processes and cannot be used together. In landings, a breaking parachute can be used if required in addition to speed reduction; no auxiliary methods are needed in supporting propulsion but new explosion engines with propellers or reaction engines could be installed ensuring low manufacturing cost.

### DESCRIPTION OF THE INVENTION

The air jet helical rotor placed in the central point of the machinery has been extensively described in the Patent numbered PCT/ES 2004/000087 and named "Round honeycomb rotor" which is currently under procedure being Felix Sánchez Sánchez its inventor. It is being presented as an important accessory for this Patent having been designed to fit all types of flying aircrafts. It is provided with an explosion engine requiring many revolutions per minute (r.p.m.); the entrance of air is located in the front of the aircraft through the spaces left by the nerves. On the one hand this entrance of air is produced by two effects, 1° by the machine speed itself and 2° by the absorption or suction produced by the helical round honeycomb rotor.

On the other hand a butterfly type door orientates the entrance of this air in two different directions being horizontal the first air entrance position as it is fundamental for the well functioning of aircrafts; the second position whose main function is to completely shut down the horizontal air entrance producing an instant perpendicular change in the butterfly position which allows the operating of upwards power by absorption. This first body is followed by the rotor itself whose cube has been fixed to the previously mentioned explosion engine and whose spinning is being protected by the machinery second body which has a cylindrical tubular enveloping shape. The explosion engine has been permanently fixed on the third body made of a tubular figure with conical base and the reduction of pressured air exiting the conical base added to the number of rotors will be crucial in determining the aircraft speed. Thanks to this conical shape the air pressure produced by the helical round honeycomb rotor increases having the conical base tube a butterfly type door located in its exit responsible for orientating the air in two different directions, backwards as a fundamental propeller for the well functioning of aircrafts and downwards as such air jet produces a supporting force and therefore a balance in the back of aircrafts. These two opposite forces applied in the front (upwards) and the back (downwards) of the aircraft create a balance that allows aircrafts to fly at low speed and therefore facilitates landing on very small landing strips with minimum speed (km/h). This is even applicable to very small aircrafts that could land in the way helicopters do, that is why there is in the lower back of the aircraft a door with two positions : the first one is to orientate the air jet that flows perpendicularly due to the butterfly closing the air jet exit area and creating a supporting source of power. In the second position (45° approximately) it makes the air jet flow in the opposite direction providing the aircraft with a breaking power and allowing it to move around once landed without additional mechanical support. At the same time the cylinders with conical base shape have on one side of their back small doors that when opened allow the air jet to produce a right or left movement depending on which door is opened and make the aircraft land or take off with a 90% reduction in air pollution as for reactors concern. All of this facilitates the implementation of shorter landing strips which could result in airports being wider than larger which would allow several aircrafts to take off or land at the same time and also reduce landing and taking off risks due to speed dropping in both processes.

### DESCRIPTION OF DRAWINGS

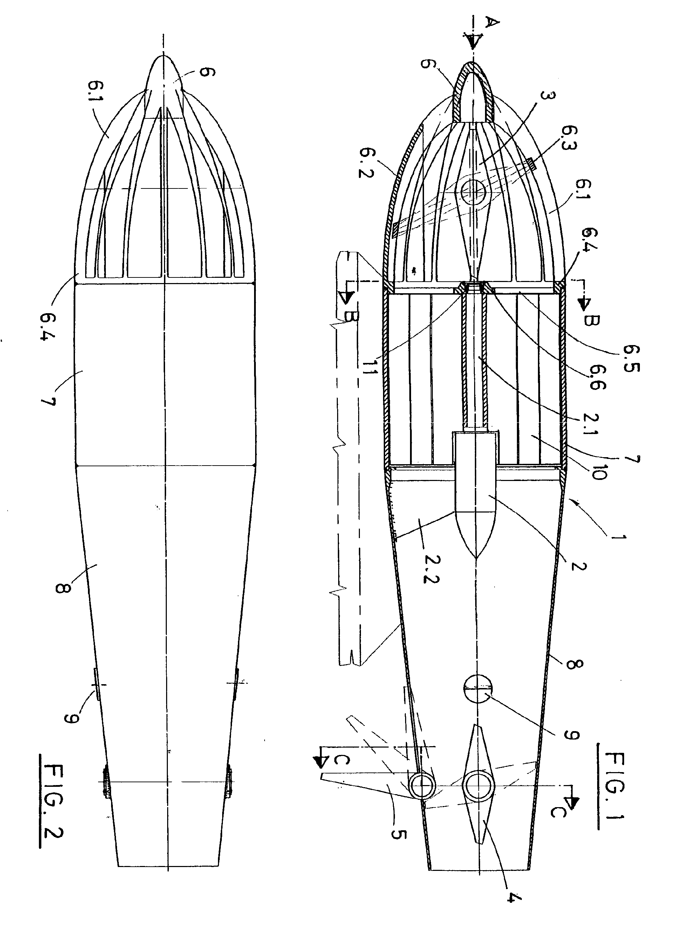

Figure 1 is a sectional view in which we can appreciate the propulsion overall support system (1) as well as the aircraft stability with its head (6) and extended support nerves (6.1). The entrance of air happens through the spaces left by the nerves (in the drawing we have 12 nerves represented) and showing in its back a shutting hoop (6.3) communicated with the swinging tray (3).
   The lower part is partially closed by the cap (6.2) followed by a ring (6.4) from which 3 nerves (6.5) are connected to the cube or nucleus (6.6) that supports the pilot bearing (11) which itself supports the rotor (10) axis (2.1) enveloped in a cover (7).
   The axis (2.1) fits into the explosion engine (2) which leans against the supporting nerves (2.2) fixed into the back pipe (8) and supporting on its outer sides small hatchways closed down by two butterfly type doors (9). These can be on one or both sides to allow orientated manoeuvring while at the end of this back pipe, and underneath it lays an opening directed by a gate (5) which has in its central part a rotating tray operating as a close down or open up butterfly (4) for the exit of air.
Figure 2 is an overall view of figure 1 in which we can see the head's (6) nerves (6.1) connected to the ring (6.4) followed by the rotor enveloping cover (7) and by the wind exit final pipe (8) as well as the butterflies in charge of manoeuvring orientation.

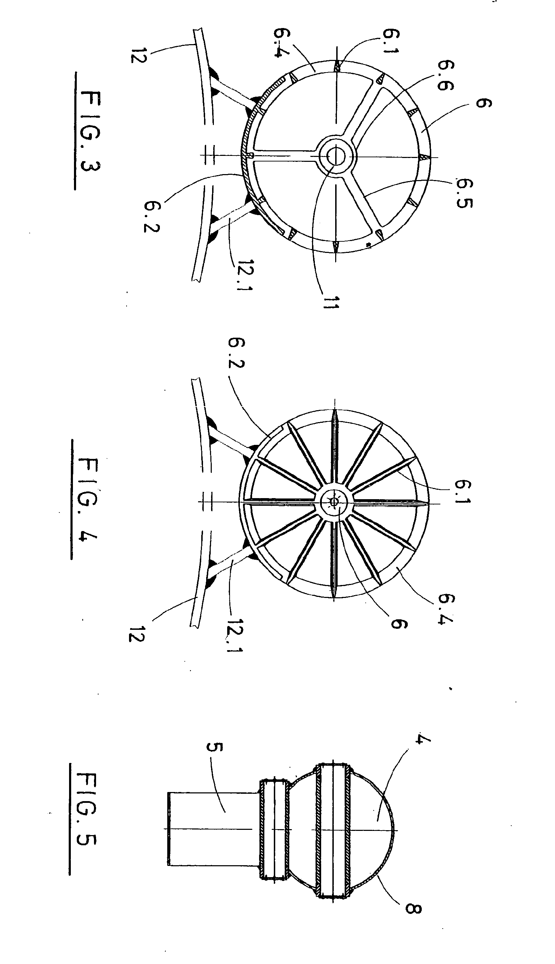

Figure 3 is the "B-B" section of figure 1 where we can appreciate sections of nerves (6.1) and the lower cap (6.2) ending on the ring (6.4) which has three equidistant arms spreading out from inside the ring (6.5) towards the centre to shape up the cube or nucleus (6.6) where the pilot bearing is located (11) and the nerves (12.1) are supporting the whole system on the aircraft (12).
Figure 4 shows a frontal view according to the letter "A" of figure 1.
Figure 5 is the representation of the "C-C" section of figure 1 showing the back pipe (8) with a conical base shape and the sections of the butterfly articulations (4) as the entrance and exit of air as well as the gate (5) located in the lower part of the back pipe (8).

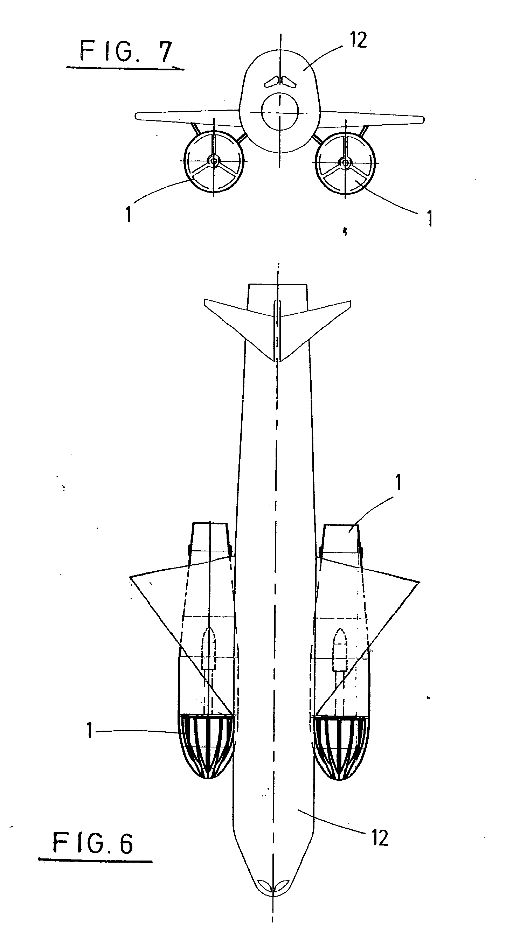

Figure 6 shows the overall drawing of the aircraft (12) with the aerodynamic sets in charge of propulsion (1) located under the wings.
Figure 7 is the frontal view of the above mentioned overall set.

### DESCRIPTION OF A PREFERENTIAL PERFORMANCE

The aerodynamic body that produces the propulsion effect through the helical round honeycomb rotor is composed of three cylindrical bodies: the first one belongs to the head (6) with an oval profile formed with series of nerves (6.1) and a butterfly closing in the air main entrance area (3) and closed in the bottom (6.3). This head connects with the second body consisting of the rotor enveloping cover (10) with a perfect cylindrical shape which is not subject of description here as it is totally integrated in the patent PCT/ES 2004/00087. An explosion engine (2) is fixed in its axis leaning against the nerves (2.1). The aerodynamic body (1) is followed by the third body or back (8) with a conical base shape with small hatchways, swinging butterfly type doors (9) and in its central part a rotating tray (4) capable of entirely opening or closing down the circular body surface.

In the same position on the lower part we see a multi-graduated doorway (5) whose objective is to give support by inverting the direction of the air jet and allowing a backward gearing of the aircraft when located on the landing strip.

This air jet propeller (1) in its practical use is fitted on an aircraft, with one, two, three or more sets; the helical round honeycomb rotor acts out as a generator to allow propulsion with a lesser pollution level and petrol consumption saving. Thanks to the different hatchways, gates and butterflies better balance and stability are achieved in all the manoeuvring movements.

Once the industrial object of this patent has been clearly and widely described as to allow its exploitation, I declare it new and of my own invention except for its accidental details such as shape, size, materials and manufacturing procedures. They can be manufactured with any geometrical regular or irregular shape as well as being readapted within the unchangeable speciality that is resumed in the following:

## Claims

1. Air jet impeller, with exterior valves to manoeuvre aircraft on the runway or airport aprons, which, based on a round-shaped honeycomb like a helicoidal rotor, consisting of a set of curved trapezoidal tubes with a heliciodal feed, all joined together by means of tubular cylinders that substantially help the propulsion of aircraft and aeroplanes, with one or more aerodynamic bodies resting upon the same. This features various bodies, the oval shaped intake body 6), the central body (7) consisting of a tubular cylinder and the end or tail body, (8), the air intake head body (6), with ribbing both on the upper and minimum lower parts, (6.1) where the air enters through the same, with a closure system (6.3), consisting of a gate leaf or a swivelling tray (3), whilst the lower part of this head (6), up to where the ribbing is located (6.1) is found partially closed with the sector (6.2), that closes the intake body perimeter-wise (6), which is an important part of this lower area.

2. Air jet impeller in accordance with the first claim, **characterised by** consisting of a previously mentioned helicoidal round honeycomb rotor (10), that is covered on the central tubular cylindrical body (7) and this rotor (10) acting as an air jet impeller supported at the head (6), by means of a bearing (11), whilst at the other side of the rotor shaft (10), it is supported by an internal combustion engine (2), attached to the tubular truncated cone body (8), by means of the support strut (2.2).

3. Air jet impeller, in accordance with the previous claims, **characterised** due to having a centre part in the shape of a cylindrical tubular figure (7) as a rotor pod (10), continuing with the truncated conical shaped end conduit (8), having small hatches with butterfly type swivelling doors for positioning (9), whilst having a leaf or swivelling gate in the centre part (4), for opening and closing that manoeuvres the entire circular body surface (8), and on the same position but in its lower part a variable regulation braking gate is contemplated (5).
